# DEMANDE DE BREVET EUROPEEN

(11) **EP 4 836 031 A1**
(43) Date de publication de la demande: **04.11.2026**
(21) Numéro de dépôt: 26166880.0
(22) Date de dépôt: 23.03.2026
(51) Int. Cl.: H01M 8/0258, H01M 8/0267, H01M 8/2483, H01M 8/10

(54) **PLAQUE POUR UN EMPILEMENT DE PILE À COMBUSTIBLE**

(30) Priorité: 29.04.2025 FR 2504510
(71) Demandeur: L'Air Liquide, Société Anonyme pour l'Etude et l'Exploitation des Procédés Georges Claude, 75007 Paris (FR)
(72) Inventeur: SIRAC, Denis, 75007 PARIS (FR); ANDRE, Johan, 75007 PARIS (FR)
(74) Mandataire: Air Liquide

(57) **Abrégé**

Plaque (1) pour un empilement de pile à combustible comportant :
- un orifice collecteur de sortie de réactif (21) ;
- un orifice collecteur d'entrée de réactif (31) agencé pour permettre l'entrée d'un fluide réactif par l'intermédiaire d'une première lumière (10) s'étendant entre une extrémité supérieure (15) et une extrémité inférieure ;
- un orifice collecteur de sortie de fluide de refroidissement (32) relié fluidiquement à un circuit de refroidissement (4) via un canal d'évacuation (7) ;
la plaque (1) étant configurée pour que, lorsqu'elle s'étend dans un premier plan vertical dans lequel l'orifice collecteur d'entrée de réactif (31) est au-dessus de l'orifice collecteur de sortie de réactif (21) et dans lequel l'extrémité supérieure (15) est au-dessus de l'extrémité inférieure, le canal d'évacuation (7) s'étend au moins partiellement au-dessus de l'extrémité supérieure (15).

## Description

La présente invention porte sur une plaque pour un empilement de pile à combustible du type à membrane échangeuse de protons et une pile à combustible.

L'invention trouve une application particulièrement avantageuse avec les piles à combustible dont les plaques peuvent se trouver dans un plan vertical lorsque la pile est en cours d'utilisation.

De façon connue en soi, une pile à combustible est un dispositif électrochimique qui permet de convertir l'énergie chimique en énergie électrique à partir d'un carburant, généralement du dihydrogène, et d'un comburant, généralement du dioxygène ou un gaz en contenant tel que l'air, le produit de la réaction étant l'eau accompagnée d'un dégagement de chaleur et d'une production d'électricité.

Une pile à combustible à membrane échangeuse de protons comporte classiquement un empilement d'une pluralité de cellules dans lequel les cellules comprennent chacune une plaque anodique et une plaque cathodique prenant en sandwich un Assemblage Membrane Electrodes (AME).

Les cellules de pile à combustible (côté anode et côté cathode) génèrent de la chaleur (les réactions chimiques au sein de la cellule sont exothermiques) et doivent être refroidies.

Dans le cas d'une cellule composée de deux plaques prenant en sandwich un Assemblage Membrane Electrodes, chaque plaque (anodique ou cathodique) comprend un côté dédié à la circulation des gaz réactifs (par exemple, un comburant tel que de l'air et un carburant tel que de l'hydrogène) en vis-à-vis de l'Assemblage Membrane Electrodes, le gaz réactif circulant à travers un circuit de réactif. Chaque plaque comprend en outre un côté tourné vers l'extérieur de la cellule et dédié à la circulation du fluide de refroidissement (souvent un liquide), le fluide de refroidissement circulant à travers un circuit de refroidissement.

Selon une configuration connue, les plaques peuvent être orientées verticalement lorsque la pile est en cours d'utilisation, c'est-à-dire que le plan des plaques est vertical ou sensiblement vertical. Dans ce type de configuration, en fonction des conditions d'utilisation des cellules, il peut se produire des problèmes au niveau de la gestion de l'eau dans la pile (Assemblage Membrane Électrodes noyé d'eau, surplus d'eau dans les canaux de réactifs, mauvaise alimentation en air...).

La gestion de l'eau est cruciale et impose de faire des choix relatifs à la géométrie des collecteurs, ainsi qu'à leur disposition en fonction de l'orientation de la pile. Il en va de même pour l'évacuation des bulles de gaz du circuit de refroidissement.

En effet, il est important de favoriser l'évacuation de l'eau liquide (produit de la réaction) hors des cellules. En particulier, la position des collecteurs par rapport à la surface active peut être contrainte dans une position défavorable vis-à-vis de l'écoulement gravitaire, sans qu'il ne soit possible d'introduire de force motrice pour évacuer l'eau ainsi produite (pompe de recirculation, gradient de pression, purges, ...).

Ainsi, il est important de prévoir une purge optimale du circuit de refroidissement pour éviter la présence de bulles de gaz, dans le circuit refroidissement (par exemple de l'air ou autre gaz tel que de l'azote).

La présente invention vise à remédier efficacement à ces inconvénients en proposant une plaque pour un empilement de pile à combustible du type à membrane échangeuse de protons, la plaque comportant une face réactive et une face de refroidissement opposées l'une par rapport à l'autre, la face réactive comportant un circuit de réactif destiné à faire face à un Assemblage Membrane Électrodes lorsque la plaque est assemblée dans la pile, le circuit de réactif étant muni de reliefs et de creux formant des canaux de circulation d'un premier fluide réactif, chacun des canaux étant séparé d'un autre des canaux par une dent, la face de refroidissement étant agencée pour former conjointement avec une autre plaque de l'empilement lorsque la plaque est assemblée dans la pile, un circuit de refroidissement pour la circulation d'un fluide de refroidissement, la plaque comportant :
- un orifice collecteur d'entrée de réactif formé au travers de la plaque et agencé pour permettre d'alimenter, par l'intermédiaire d'une première lumière formée au travers de la plaque, le circuit de réactif avec le premier fluide réactif, la première lumière s'étendant entre une extrémité supérieure et une extrémité inférieure ;
- un orifice collecteur de sortie de réactif formé au travers de la plaque et agencé pour permettre d'évacuer, par l'intermédiaire d'une deuxième lumière formée au travers de la plaque, le premier fluide réactif ayant traversé le circuit de réactif ;
- un premier orifice de passage de réactif et un deuxième orifice de passage de réactif, chacun étant formé au travers de la plaque et agencé pour permettre le passage d'un deuxième fluide réactif, à travers la plaque sans qu'il ne traverse le circuit de réactif ;
- un orifice collecteur d'entrée de fluide de refroidissement formé au travers de la plaque et agencé pour permettre d'alimenter en fluide de refroidissement, le circuit de refroidissement ;
- un orifice collecteur de sortie de fluide de refroidissement formé au travers de la plaque et agencé pour permettre d'évacuer le fluide de refroidissement ayant traversé le circuit de refroidissement, l'orifice collecteur de sortie de fluide de refroidissement étant relié fluidiquement au circuit de refroidissement via un premier canal d'évacuation ;
la plaque étant configurée pour que, lorsque la plaque s'étend dans un premier plan vertical dans lequel l'orifice collecteur d'entrée de réactif est dans une position plus haute que celle de l'orifice collecteur de sortie de réactif et dans lequel l'extrémité supérieure de la première lumière est au-dessus de l'extrémité inférieure de la première lumière, le premier canal d'évacuation s'étend au moins partiellement au-dessus de l'extrémité supérieure de la première lumière.

Ceci permet de guider les bulles de gaz (le gaz étant par exemple de l'air) se formant dans le circuit de refroidissement, vers un point haut de la plaque, en particulier au-dessus du circuit de réactif lorsque la plaque est dans une position verticale et que la pile est en cours d'utilisation.

Selon une réalisation, le premier fluide réactif comporte un carburant tel que de l'hydrogène.

Selon une réalisation, le deuxième fluide réactif comporte un comburant tel que de l'air.

Selon une réalisation, l'orifice collecteur d'entrée de réactif est disposé au-dessus de l'orifice collecteur de sortie de réactif, lorsque la plaque s'étend dans le premier plan.

Selon une réalisation, chacun des canaux du circuit de réactif est disposé au-dessous d'au moins une portion du premier canal d'évacuation, lorsque la plaque s'étend dans le premier plan.

Selon une réalisation, le premier canal d'évacuation s'étend au moins partiellement au-dessus du premier orifice de passage de réactif, lorsque la plaque s'étend dans le premier plan et/ou le premier canal d'évacuation s'étend au moins partiellement au-dessus du deuxième orifice de passage de réactif, lorsque la plaque s'étend dans le premier plan.

Selon une réalisation, le premier canal d'évacuation s'étend au moins partiellement au-dessus de l'orifice collecteur de sortie de réactif, lorsque la plaque s'étend dans le premier plan et/ou le premier canal d'évacuation s'étend au moins partiellement au-dessus de l'orifice collecteur d'entrée de réactif, lorsque la plaque s'étend dans le premier plan.

Selon une réalisation, le premier canal d'évacuation s'étend au moins partiellement au-dessus de l'orifice collecteur d'entrée de fluide de refroidissement, lorsque la plaque s'étend dans le premier plan.

Selon une réalisation, le premier canal d'évacuation s'étend au moins partiellement au-dessus d'un axe longitudinal contenu dans le premier plan et passant par l'extrémité supérieure de la première lumière, lorsque la plaque s'étend dans le premier plan.

Selon une réalisation, le premier canal d'évacuation forme un coude coupant au moins deux fois l'axe longitudinal, le coude étant par exemple disposé au-dessus de la première lumière, lorsque la plaque s'étend dans le premier plan.

Selon une réalisation, la plaque présente une zone centrale entourée par une première zone transversale, par une deuxième zone transversale opposée à la première zone transversale, par une bande longitudinale supérieure et par une bande longitudinale inférieure, la première zone transversale débouchant sur un premier bord transversal de la plaque, la deuxième zone transversale débouchant sur un deuxième bord transversal de la plaque, la bande longitudinale inférieure débouchant sur un bord inférieur de la plaque et la bande longitudinale supérieure débouchant sur un bord supérieur de la plaque, le circuit de réactif et le circuit de refroidissement étant ménagés dans la zone centrale, lorsque la plaque s'étend dans le premier plan.

Selon une réalisation, l'orifice collecteur d'entrée de réactif, le deuxième orifice de passage de réactif et l'orifice collecteur de sortie de fluide de refroidissement sont tous disposés dans la deuxième zone transversale.

Selon une réalisation, l'orifice collecteur de sortie de réactif, le premier orifice de passage de réactif et l'orifice collecteur d'entrée de fluide de refroidissement sont tous disposés dans la première zone transversale.

Selon une réalisation, le premier canal d'évacuation est disposé au moins partiellement dans la bande longitudinale supérieure.

Selon une réalisation, le circuit de refroidissement est configuré pour permettre un refroidissement de l'Assemblage Membrane Électrodes, par exemple via le circuit de réactif.

Selon une réalisation, le circuit de réactif est configuré pour permettre une réaction électrochimique entre le premier fluide réactif et l'Assemblage Membrane Électrode.

Selon une réalisation, la plaque est configurée de sorte que le circuit de refroidissement et le circuit de réactif soient en vis-à-vis en étant par exemple séparés entre eux, par l'épaisseur de la plaque.

Selon une réalisation, la plaque est configurée de sorte que le circuit de refroidissement et le circuit de réactif soient alignés orthogonalement.

Selon une réalisation, le premier canal d'évacuation est disposé en dehors du circuit de refroidissement.

Selon une réalisation, la face de refroidissement est destinée à faire face à la face de refroidissement d'une autre plaque de l'empilement.

Selon une réalisation, l'orifice collecteur d'entrée de fluide de refroidissement est relié fluidiquement au circuit de refroidissement via un canal d'alimentation.

Selon une réalisation, chaque canal du circuit de réactif débouche par une de ses extrémités, dans le premier canal d'évacuation, le premier canal d'évacuation comportant par exemple une portion s'étendant dans une direction perpendiculaire à l'axe longitudinal.

Selon une réalisation, la plaque comporte un deuxième canal d'évacuation reliant fluidiquement l'orifice collecteur de sortie de fluide de refroidissement et le circuit de refroidissement, le deuxième canal d'évacuation s'étendant au moins partiellement en-dessous du deuxième orifice de passage de réactif, lorsque la plaque s'étend dans le premier plan.

La configuration dans laquelle un premier canal d'évacuation s'étend au moins partiellement au-dessus du premier orifice de passage de réactif lorsque la plaque s'étend dans le premier plan, en combinaison avec un deuxième canal d'évacuation s'étendant au moins partiellement au-dessous du deuxième orifice de passage de réactif, lorsque la plaque s'étend dans le premier plan, permet d'optimiser l'homogénéité de distribution du fluide de refroidissement, tout en guidant les bulles de gaz vers un point haut de la plaque.

L'invention concerne en outre une pile à combustible du type à membrane échangeuse de protons, comportant un empilement de plaques du type tel que décrit ci-dessus, chaque plaque étant configurée pour que l'orifice collecteur d'entrée de réactif soit disposé au-dessus de l'orifice collecteur de sortie de réactif, lorsqu'au moins une des plaques s'étend dans le premier plan.

Selon une réalisation, le premier fluide réactif et le deuxième fluide réactif sont à contre-courant.

Selon une réalisation, le deuxième fluide réactif et le fluide de refroidissement sont à co-courant, le deuxième fluide réactif comportant par exemple un comburant tel que de l'air.

Selon une réalisation, le premier fluide réactif et le fluide de refroidissement sont à contre-courant, le premier fluide réactif comportant par exemple un carburant tel que de l'hydrogène.

L'invention peut encore concerner tout dispositif ou procédé alternatif comprenant toute combinaison des caractéristiques ci-dessus ou ci-dessous.

L'invention sera mieux comprise à la lecture de la description qui suit et à l'examen de la figure qui l'accompagne. Cette figure n'est donnée qu'à titre illustratif mais nullement limitatif de l'invention.

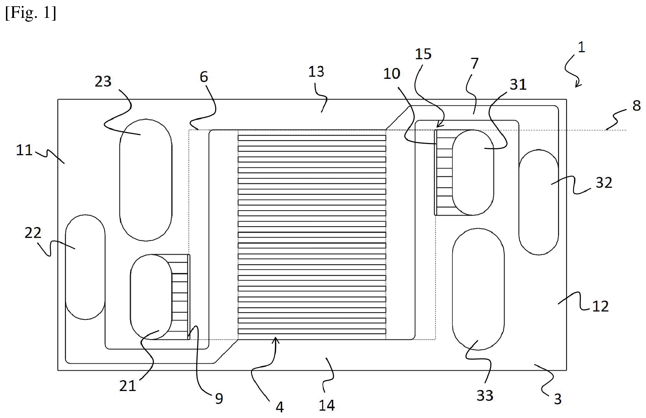

[Fig.1] La [Fig.1] est une vue schématique d'une plaque selon l'invention.

En référence à la [Fig.1], on a représenté une plaque 1 pour un empilement de pile à combustible du type à membrane échangeuse de protons.

La plaque 1 comporte une face réactive et une face de refroidissement 3 opposées l'une par rapport à l'autre.

La face réactive comporte un circuit de réactif destiné à faire face à un Assemblage Membrane Électrodes lorsque la plaque 1 est assemblée dans la pile.

Le circuit de réactif étant muni de reliefs et de creux formant des canaux de circulation d'un premier fluide réactif, chacun des canaux étant séparé d'un autre des canaux par une dent.

La face de refroidissement 3 est agencée pour former conjointement avec une autre plaque de l'empilement lorsque la plaque 1 est assemblée dans la pile, un circuit de refroidissement 4 pour la circulation d'un fluide de refroidissement.

La plaque 1 comporte :
- un orifice collecteur d'entrée de réactif 31 formé au travers de la plaque 1 et agencé pour permettre d'alimenter, par l'intermédiaire d'une première lumière 10 formée au travers de la plaque 1, le circuit de réactif avec le premier fluide réactif, la première lumière 10 s'étendant entre une extrémité supérieure 15 et une extrémité inférieure ;
- un orifice collecteur de sortie de réactif 21 formé au travers de la plaque 1 et agencé pour permettre d'évacuer, par l'intermédiaire d'une deuxième lumière 9 formée au travers de la plaque 1, le premier fluide réactif ayant traversé le circuit de réactif ;
- un premier orifice de passage de réactif 23 et un deuxième orifice de passage de réactif 33, chacun étant formé au travers de la plaque 1 et agencé pour permettre le passage d'un deuxième fluide réactif, à travers la plaque 1 sans qu'il ne traverse le circuit de réactif ;
- un orifice collecteur d'entrée de fluide de refroidissement 22 formé au travers de la plaque 1 et agencé pour permettre d'alimenter en fluide de refroidissement, le circuit de refroidissement 4 ;
- un orifice collecteur de sortie de fluide de refroidissement 32 formé au travers de la plaque 1 et agencé pour permettre d'évacuer le fluide de refroidissement ayant traversé le circuit de refroidissement 4, l'orifice collecteur de sortie de fluide de refroidissement 32 étant relié fluidiquement au circuit de refroidissement 4 via un premier canal d'évacuation 7.

La plaque 1 est configurée pour que, lorsque la plaque 1 s'étend dans un premier plan vertical dans lequel l'orifice collecteur d'entrée de réactif 31 est dans une position plus haute que celle de l'orifice collecteur de sortie de réactif 21 et dans lequel l'extrémité supérieure 15 de la première lumière 10 est au-dessus de l'extrémité inférieure de la première lumière 10, le premier canal d'évacuation 7 s'étend au moins partiellement au-dessus de l'extrémité supérieure 15 de la première lumière 10.

L'orifice collecteur d'entrée de réactif 31 est disposé au-dessus de l'orifice collecteur de sortie de réactif 21, lorsque la plaque 1 s'étend dans le premier plan.

Chacun des canaux du circuit de réactif est disposé au-dessous d'au moins une portion du premier canal d'évacuation 7, lorsque la plaque 1 s'étend dans le premier plan.

Le premier canal d'évacuation 7 s'étend au moins partiellement au-dessus du premier orifice de passage de réactif 23, lorsque la plaque 1 s'étend dans le premier plan et/ou le premier canal d'évacuation 7 s'étend au moins partiellement au-dessus du deuxième orifice de passage de réactif 33, lorsque la plaque 1 s'étend dans le premier plan.

Le premier canal d'évacuation 7 s'étend au moins partiellement au-dessus de l'orifice collecteur de sortie de réactif 21, lorsque la plaque 1 s'étend dans le premier plan et/ou le premier canal d'évacuation 7 s'étend au moins partiellement au-dessus de l'orifice collecteur d'entrée de réactif 31, lorsque la plaque 1 s'étend dans le premier plan.

Le premier canal d'évacuation 7 s'étend au moins partiellement au-dessus de l'orifice collecteur d'entrée de fluide de refroidissement 22, lorsque la plaque 1 s'étend dans le premier plan.

Le premier canal d'évacuation 7 s'étend au moins partiellement au-dessus d'un axe longitudinal 8 contenu dans le premier plan et passant par l'extrémité supérieure 15 de la première lumière 10, lorsque la plaque 1 s'étend dans le premier plan.

Le premier canal d'évacuation 7 forme un coude coupant au moins deux fois l'axe longitudinal 8, le coude étant par exemple disposé au-dessus de la première lumière 10, lorsque la plaque 1 s'étend dans le premier plan.

La plaque 1 présente une zone centrale 6 entourée par une première zone transversale 11, par une deuxième zone transversale 12 opposée à la première zone transversale 11, par une bande longitudinale supérieure 13 et par une bande longitudinale inférieure 14, la première zone transversale 11 débouchant sur un premier bord transversal de la plaque 1, la deuxième zone transversale débouchant sur un deuxième bord transversal de la plaque 1, la bande longitudinale inférieure 14 débouchant sur un bord inférieur de la plaque 1 et la bande longitudinale supérieure 13 débouchant sur un bord supérieur de la plaque 1, le circuit de réactif et le circuit de refroidissement 4 étant ménagés dans la zone centrale 6, lorsque la plaque 1 s'étend dans le premier plan.

L'orifice collecteur d'entrée de réactif 31, le deuxième orifice de passage de réactif 33 et l'orifice collecteur de sortie de fluide de refroidissement 32 sont tous disposés dans la deuxième zone transversale 12.

L'orifice collecteur de sortie de réactif 21, le premier orifice de passage de réactif 23 et l'orifice collecteur d'entrée de fluide de refroidissement 22 sont tous disposés dans la première zone transversale 11.

Le premier canal d'évacuation 7 est disposé au moins partiellement dans la bande longitudinale supérieure 13.

L'invention concerne encore une pile à combustible du type à membrane échangeuse de protons, comportant un empilement de plaques 1 du type de celui représenté à la [Fig.1].

Chaque plaque 1 est configurée pour que l'orifice collecteur d'entrée de réactif 31 soit disposé au-dessus de l'orifice collecteur de sortie de réactif 21, lorsqu'au moins une des plaques 1 de l'empilement s'étend dans le premier plan.

Le premier fluide réactif et le deuxième fluide réactif sont à contre-courant.

Le deuxième fluide réactif et le fluide de refroidissement sont à co-courant, le deuxième fluide réactif comportant un comburant tel que de l'air ou un carburant tel que de l'hydrogène.

## Revendications

1. Plaque (1) pour un empilement de pile à combustible du type à membrane échangeuse de protons, la plaque (1) comportant une face réactive et une face de refroidissement (3) opposées l'une par rapport à l'autre, la face réactive comportant un circuit de réactif destiné à faire face à un Assemblage Membrane Électrodes lorsque la plaque (1) est assemblée dans la pile, le circuit de réactif étant muni de reliefs et de creux formant des canaux de circulation d'un premier fluide réactif, chacun des canaux étant séparé d'un autre des canaux par une dent, la face de refroidissement (3) étant agencée pour former conjointement avec une autre plaque de l'empilement lorsque la plaque (1) est assemblée dans la pile, un circuit de refroidissement (4) pour la circulation d'un fluide de refroidissement, la plaque (1) comportant :
- un orifice collecteur d'entrée de réactif (31) formé au travers de la plaque (1) et agencé pour permettre d'alimenter, par l'intermédiaire d'une première lumière (10) formée au travers de la plaque (1), le circuit de réactif avec le premier fluide réactif, la première lumière (10) s'étendant entre une extrémité supérieure (15) et une extrémité inférieure ;
- un orifice collecteur de sortie de réactif (21) formé au travers de la plaque (1) et agencé pour permettre d'évacuer, par l'intermédiaire d'une deuxième lumière (9) formée au travers de la plaque (1), le premier fluide réactif ayant traversé le circuit de réactif ;
- un premier orifice de passage de réactif (23) et un deuxième orifice de passage de réactif (33), chacun étant formé au travers de la plaque (1) et agencé pour permettre le passage d'un deuxième fluide réactif, à travers la plaque (1) sans qu'il ne traverse le circuit de réactif ;
- un orifice collecteur d'entrée de fluide de refroidissement (22) formé au travers de la plaque (1) et agencé pour permettre d'alimenter en fluide de refroidissement, le circuit de refroidissement (4) ;
- un orifice collecteur de sortie de fluide de refroidissement (32) formé au travers de la plaque (1) et agencé pour permettre d'évacuer le fluide de refroidissement ayant traversé le circuit de refroidissement (4), l'orifice collecteur de sortie de fluide de refroidissement (32) étant relié fluidiquement au circuit de refroidissement (4) via un premier canal d'évacuation (7) ;
la plaque (1) étant configurée pour que, lorsque la plaque (1) s'étend dans un premier plan vertical dans lequel l'orifice collecteur d'entrée de réactif (31) est dans une position plus haute que celle de l'orifice collecteur de sortie de réactif (21) et dans lequel l'extrémité supérieure (15) de la première lumière (10) est au-dessus de l'extrémité inférieure de la première lumière (10), le premier canal d'évacuation (7) s'étend au moins partiellement au-dessus de l'extrémité supérieure (15) de la première lumière (10).

2. Plaque (1) selon la revendication précédente, **caractérisée en ce que** l'orifice collecteur d'entrée de réactif (31) est disposé au-dessus de l'orifice collecteur de sortie de réactif (21), lorsque la plaque (1) s'étend dans le premier plan.

3. Plaque (1) selon l'une des revendications précédentes, **caractérisée en ce que** chacun des canaux du circuit de réactif est disposé au-dessous d'au moins une portion du premier canal d'évacuation (7), lorsque la plaque (1) s'étend dans le premier plan.

4. Plaque (1) selon l'une des revendications précédentes, **caractérisée en ce que** le premier canal d'évacuation (7) s'étend au moins partiellement au-dessus du premier orifice de passage de réactif (23), lorsque la plaque (1) s'étend dans le premier plan et/ou **en ce que** le premier canal d'évacuation (7) s'étend au moins partiellement au-dessus du deuxième orifice de passage de réactif (33), lorsque la plaque (1) s'étend dans le premier plan.

5. Plaque (1) selon l'une des revendications précédentes, **caractérisée en ce que** le premier canal d'évacuation (7) s'étend au moins partiellement au-dessus de l'orifice collecteur de sortie de réactif (21), lorsque la plaque (1) s'étend dans le premier plan et/ou **en ce que** le premier canal d'évacuation (7) s'étend au moins partiellement au-dessus de l'orifice collecteur d'entrée de réactif (31), lorsque la plaque (1) s'étend dans le premier plan.

6. Plaque (1) selon l'une des revendications précédentes, **caractérisée en ce que** le premier canal d'évacuation (7) s'étend au moins partiellement au-dessus de l'orifice collecteur d'entrée de fluide de refroidissement (22), lorsque la plaque (1) s'étend dans le premier plan.

7. Plaque (1) selon l'une des revendications précédentes, **caractérisée en ce que** le premier canal d'évacuation (7) s'étend au moins partiellement au-dessus d'un axe longitudinal (8) contenu dans le premier plan et passant par l'extrémité supérieure (15) de la première lumière (10), lorsque la plaque (1) s'étend dans le premier plan, le premier canal d'évacuation (7) formant par exemple un coude coupant au moins deux fois l'axe longitudinal (8), le coude étant par exemple disposé au-dessus de la première lumière (10) lorsque la plaque (1) s'étend dans le premier plan.

8. Plaque (1) selon l'une des revendications précédentes, **caractérisée en ce que** la plaque (1) présente une zone centrale (6) entourée par une première zone transversale (11), par une deuxième zone transversale (12) opposée à la première zone transversale (11), par une bande longitudinale supérieure (13) et par une bande longitudinale inférieure (14), la première zone transversale (11) débouchant sur un premier bord transversal de la plaque (1), la deuxième zone transversale débouchant sur un deuxième bord transversal de la plaque (1), la bande longitudinale inférieure (14) débouchant sur un bord inférieur de la plaque (1) et la bande longitudinale supérieure (13) débouchant sur un bord supérieur de la plaque (1), le circuit de réactif et le circuit de refroidissement (4) étant ménagés dans la zone centrale (6), lorsque la plaque (1) s'étend dans le premier plan.

9. Plaque (1) selon la revendication précédente, **caractérisée en ce que** le premier canal d'évacuation (7) est disposé au moins partiellement dans la bande longitudinale supérieure (13).

10. Pile à combustible du type à membrane échangeuse de protons, comportant un empilement de plaques (1) selon l'une des revendications précédentes, chaque plaque (1) étant configurée pour que l'orifice collecteur d'entrée de réactif (31) soit disposé au-dessus de l'orifice collecteur de sortie de réactif (21), lorsqu'au moins une des plaques (1) s'étend dans le premier plan.
